# EUROPÄISCHE PATENTSCHRIFT

(11) **EP 2 442 390 B1**
(45) Veröffentlichungstag und Bekanntmachung des Hinweises auf die Patenterteilung: **19.02.2014**
(21) Anmeldenummer: 11179727.0
(22) Anmeldetag: 01.09.2011
(51) Int. Cl.: H01M 6/50, H01M 10/42, H01M 10/50, H01M 10/0525

(54) **Batterie mit verminderter Brandgefahr**
Battery with reduced risk of fire
Batterie dotée d'un risque d'incendie réduit

(30) Priorität: 14.10.2010 DE 102010042460
(43) Veröffentlichungstag der Anmeldung: 18.04.2012
(73) Patentinhaber: Samsung SDI Co., Ltd., Gyeonggi-do (KR); Robert Bosch GmbH, 70442 Stuttgart (DE)
(72) Erfinder: Cois, Olivier, 71272 Renningen (DE); Leuthner, Stephan, 71229 Leonberg (DE)
(74) Vertreter: Bee, Joachim

(56) Entgegenhaltungen:
- WO-A1-2011/077980
- JP-A- 2010 034 002
- US-A- 4 306 000
- US-A- 4 743 075
- US-A- 5 524 681

## Beschreibung

Die vorliegende Erfindung betrifft eine Batterie mit einer Kühleinrichtung zur Verminderung der Brandgefahr der Batterie.

### Stand der Technik

Batterien, insbesondere hochkapazitive Batterien für den Einsatz im Fahrzeugbereich, wie beispielsweise hochkapazitive Lithium-Ionen-Batterien, zeichnen sich durch eine nicht unerhebliche Wärmeentwicklung während des Regel- oder Normalbetriebs aus. Da Batterien ihr optimales Leistungsvermögen nur in einem bestimmten Temperaturbereich zu Verfügung stellen können, ist es meist notwendig, eine aktive Kühleinrichtung vorzusehen, die für eine gewünschte Betriebstemperatur sorgt und eine Überhitzung der Batterie verhindert.

Unter ungünstigen Bedingungen können eine oder mehrere Zellen einer Batterie in einen "Thermal Runaway" getrieben werden. Der Begriff "Thermal Runaway" bedeutet ein thermisches Durchgehen der Batteriezelle oder der Batterie, wobei der "Thermal Runaway" beispielsweise durch übermäßige und sich später gegebenenfalls selbst verstärkende Wärmeproduktion in einer Batteriezelle hervorgerufen werden kann. Zur Vermeidung oder Eindämmung eines "Thermal Runaways" ist eine möglichst effiziente Wärmeableitung notwendig.

Eine häufig verwendete Kühleinrichtung in Batterien bedient sich einer zirkulierenden Kühlflüssigkeit zur Kühlung der Batteriezellen. Dabei wird die Kühlflüssigkeit durch eine Pumpe von einem Wärmeübertrager zur Temperaturregulation der Kühlflüssigkeit in einem Leitungssystem zirkuliert und zur Kühlung der Batteriezellen eingesetzt. Bei Bedarf einer verstärkten Kühlleistung kann der Volumenstrom an Kühlflüssigkeit durch die Pumpe gesteigert werden, um den Wärmeübergang an der Batterie zu steigern. Eine solche Anordnung aus Batterie und aktiver Kühleinrichtung ist beispielsweise in JP 2010-034002 A offenbart.

Fällt die Pumpe jedoch aus oder ist diese in ihrer Funktion beeinträchtigt, beispielsweise durch eine Havarie, so kann die Kühlflüssigkeit nicht mehr effizient zirkuliert werden, die Wärmeübergangsrate nimmt ab und es kann keine ausreichende Kühlleistung mehr bereitgestellt werden. In der Kühlflüssigkeit steigen Druck und Temperatur an, bis schließlich der Berstdruck im Leitungskreislauf überschritten wird und es zur Explosion kommen kann.

### Offenbarung der Erfindung

Erfindungsgemäß wird eine Batterie zur Verfügung gestellt, wie sie in den Ansprüchen definiert ist. Die Batterie umfasst ein Gehäuse, eine oder mehrere im Gehäuse angeordnete Batteriezellen und eine aktive Kühleinrichtung zum Kühlen der Batteriezellen im Gehäuse. Die aktive Kühleinrichtung weist dabei eine Kühlflüssigkeit, ein Leitungssystem zur Zirkulation der Kühlflüssigkeit und eine Pumpe zur gerichteten Bewegung der Kühlflüssigkeit im Leitungssystem auf. Im Leitungssystem der erfindungsgemäßen Batterie ist ein erstes Ventil zur regel-und/oder steuerbaren Verdunstung von Kühlflüssigkeit aus dem Leitungssystem angeordnet. Die erfindungsgemäße Batterie zeichnet sich dadurch aus, dass die aktive Kühleinrichtung zusätzlich ein zweites und ein drittes Ventil aufweist, wobei das zweite Ventil im Leitungssystem in Flussrichtung der Kühlflüssigkeit zwischen der Pumpe und den zu kühlenden Batteriezellen angeordnet ist; das dritte Ventil im Leitungssystem in Flussrichtung der Kühlflüssigkeit zwischen den zu kühlenden Batteriezellen und der Pumpe angeordnet ist; wobei durch Schließen des zweiten und/oder des dritten Ventils eine Zirkulation von Kühlflüssigkeit im Leitungssystem unterbindbar ist; und, wobei das dritte Ventil mit dem ersten Ventil identisch ist und das erste Ventil derart im Leitungssystem angeordnet ist, dass die Zirkulation der Kühlflüssigkeit durch das erste Ventil erfolgt, wobei die Zirkulation der Kühlflüssigkeit bei geöffnetem Zustand im ersten Ventil unterbindbar und das erste Ventil als 3-Wege-Ventil ausgebildet ist.

Der erfindungsgemäßen Batterie liegt die Erkenntnis zugrunde, dass durch die Verwendung eines ersten Ventils zur regel- und/oder steuerbaren Verdunstung und durch dessen Öffnung im Falle eines Ausfalls oder einer Funktionseinschränkung der Pumpe die Bildung eines Überdrucks im Leitungssystem verhindert werden kann. Nach Öffnung des Ventils kann darüber Kühlflüssigkeit aus dem Leitungssystem verdampfen. Dadurch wird nicht nur die Bildung eines Überdrucks im Leitungssystem verhindert, sondern es wird auch dafür gesorgt, dass trotz beeinträchtigter Pumpenfunktion ein Wärmetransport aus der Batterie gewährleistet bleibt, der die Gefahr eines "Thermal Runaway" für einzelne, mehrere oder alle Zellen der Batterie verringert.

Die erfindungsgemäße Batterie weist ein Gehäuse auf, in dem alle Batteriezellen der Batterie angeordnet sind. Unter dem Begriff "Gehäuse" ist dabei eine Vorrichtung zu verstehen, die einen Innenraum aufweist, der geeignet ist, eine oder mehrere Batteriezellen aufzunehmen. Bevorzugt grenzt das Gehäuse die enthaltenen Batteriezellen gegenüber der Umgebung nach allen Richtungen hin vollständig ab, wobei das Gehäuse verschließbare Zugänge, wie z. B. Türen oder Öffnungen mit Deckel aufweisen kann. Unter einem Gehäuse kann dabei nicht bereits der unmittelbare Zellmantel verstanden werden, der die elektrochemischen Bestandteile einer einzelnen Batteriezelle unmittelbar von der Umwelt trennt. Bevorzugt kann das Gehäuse aus einem Material gefertigt sein, welches ein Polymer, ein Metall, ein Metallblech und/oder eine Keramik umfasst oder daraus besteht. Besonders bevorzugt kann das Gehäuse aus einem Material gefertigt sein, welches Aluminium aufweist oder daraus besteht.

Die erfindungsgemäße Batterie umfasst eine oder mehrere in dem Gehäuse angeordnete Batteriezellen. Die erfindungsgemäße Batterie weist dabei bevorzugt mehrere Batteriezellen auf, die zu einer funktionalen Einheit zusammengefasst sein können. Die Batterie kann eine oder mehrere einzelne Batteriezellen umfassen oder ein oder mehrere Batteriemodule, wobei die Module jeweils eine Mehrzahl an Batteriezellen aufweisen, die in geeigneter Weise verbunden vorliegen. Dazu können die einzelnen Batteriezellen der Batterie derart elektrisch leitend miteinander verbunden vorliegen, dass diese zu gewünschten Batteriemodul- oder Batteriearchitekturen verschaltet sind.

Unter einer Batteriezelle wird dabei ein elektrochemischer Energiespeicher verstanden, der eine Energie mittels elektrochemischer Prozesse speichern und bei Bedarf wieder bereitstellen kann. Grundsätzlich können in der erfindungsgemäßen Batterie Batteriezellen jedes Akkumulator- oder Batteriezelltyps verwendet werden. Bevorzugt umfasst die Batterie Batteriezellen vom Typ der Lithium-Ionen-Zellen, insbesondere vom Typ Li-Ion-Lithium-Ionen-Akku, LiPo-Lithium-Polymer-Akku, LiFe-Lithium-Metall-Akku, Li-Mn-Lithium-Mangan-Akku, LiFePO₄-Lithium-Eisen-Phosphat-Akkumulator, LiTi-Lithium-Titanat-Akku.

Bevorzugt handelt es sich bei der erfindungsgemäßen Batterie um eine Lithium-Ionen-Batterie, insbesondere um eine hochkapazitive Lithium-Ionen-Batterie, besonders bevorzugt um eine Batterie, z. B. eine Lithium-Ionen-Batterie, mit einer nominalen Kapazität von ≥ 2Ah, bevorzugt von ≥ 3Ah.

Die erfindungsgemäße Batterie weist eine aktive Kühleinrichtung zum Kühlen der Batterie auf. Die Kühleinrichtung umfasst eine Kühlflüssigkeit, ein Leitungssystem zur Zirkulation der Kühlflüssigkeit und eine Pumpe zur gerichteten Bewegung der Kühlflüssigkeit im Leitungssystem. Im Leitungssystem wird die Kühlflüssigkeit mittels der Pumpe derart gerichtet zirkuliert, dass ein Wärmeübertrag zwischen Batteriezellen und Kühlflüssigkeit ermöglicht ist. Dazu wird kalte Kühlflüssigkeit über das Leitungssystem herangeführt und derart über die Batterie verteilt, dass die Batteriezellen der Batterie gekühlt werden können. Dazu kann ein geeigneter Wärmeübertrager zur Übertragung von Wärmeenergie zwischen den Batteriezellen der Batterie und der Kühlflüssigkeit vorgesehen sein, z. B. in Form einer Kühlplatte o. ä. Kühlflüssigkeit, die Wärmeenergie von den Batteriezellen aufgenommen hat, wird von der Batterie abgeführt und gegebenenfalls einem weiteren Wärmeübertrager zugeführt, der die Kühlflüssigkeit wieder abkühlt. Zur Temperierung der Kühlflüssigkeit kann als solcher Wärmeübertrager beispielsweise ein Kühlsystem vorgesehen sein, welches gegebenenfalls integraler Bestandteil der aktiven Kühleinrichtung der erfindungsgemäßen Batterie sein kann. Bei dem Kühlsystem der aktiven Kühleinrichtung kann es sich beispielsweise um einen Wärmetauscher handeln, der die Kühlflüssigkeit auf eine Temperatur einstellt, die geeignet ist, die Batteriezellen der Batterie zu kühlen. Alternativ kann das Kühlsystem zur Kühlung der Kühlflüssigkeit auch als separate Vorrichtung ausgestaltet sein, die nicht Bestandteil der erfindungsgemäßen Batterie ist, beispielsweise als Kühlsystem oder Klimaanlage eines Kraftfahrzeugs, welches eine erfindungsgemäße Batterie aufweist. Geeignete aktive Kühleinrichtungen sind dem Fachmann bekannt und werden bereits erfolgreich zur Temperierung von Batterien eingesetzt.

Die erfindungsgemäße Batterie zeichnet sich dadurch aus, dass im Leitungssystem der aktiven Kühleinrichtung ein erstes Ventil angeordnet ist, über welches regel- und/oder steuerbar Kühlflüssigkeit aus dem Leitungssystem verdunstet werden kann. Dazu kann das erste Ventil im Leitungssystem derart angeordnet und ausgeführt sein, dass über das Ventil nur dann Kühlflüssigkeit aus dem Leitungssystem verdunstbar ist, wenn das erste Ventil in geöffnetem Zustand vorliegt. Ist das erste Ventil geschlossen, so kann dem Leitungssystem im Wesentlichen keine Kühlflüssigkeit durch Verdunstung entzogen werden.

Das Leitungssystem kann eine Verdunstungsleitung aufweisen, welche derart ausgebildet ist, dass darüber Kühlflüssigkeit aus der Zirkulation entfernt und an die Atmosphäre zur Verdunstung abgegeben werden kann. Dabei kann das erste Ventil in dieser Verdunstungsleitung angeordnet sein. Im geschlossenen Zustand des ersten Ventils steht die im Leitungssystem zirkulierende Kühlflüssigkeit über die Verdunstungsleitung nicht direkt mit der Umgebung in Kontakt und kann somit nicht der Zirkulation durch Verdunstung entzogen werden. Befindet sich das erste Ventil in geöffnetem Zustand, so steht Kühlflüssigkeit über ein Ende der Verdunstungsleitung direkt mit der Umgebungsatmosphäre in Kontakt und kann dem Leitungssystem durch Verdunstung entzogen werden. Das erste Ventil ist als 3-Wege-Ventil ausgestaltet.

Erfindungsgemäß ist das erste Ventil derart im Leitungssystem angeordnet sein, dass die Zirkulation der Kühlflüssigkeit durch das erste Ventil erfolgt. Dazu ist das erste Ventil als 3-Wege-Ventil ausgeführt, wobei grundsätzlich zwei unterschiedliche Schaltwege möglich sind. Das erste Ventil ist als 3-Wege-Ventil ausgestaltet mit einer geschlossenen Schaltstellung, bei der die Kühlflüssigkeit frei durch das erste Ventil zirkulieren, aber nicht verdunsten kann. In der geöffneten Schaltstellung des ersten Ventils ist die Zirkulation im Leitungssystem bei dieser Schaltstellung unterbrochen. In jedem Fall ist bei geöffneter Schaltstellung des ersten Ventils die Verdunstung von Kühlflüssigkeit aus dem Leitsystem ermöglicht.

Nun kann es vorkommen, dass z. B. durch eine Havarie nicht nur die Pumpe der erfindungsgemäßen Batterie beschädigt und in ihrer Funktion beeinträchtigt wird, sondern gegebenenfalls das Leitungssystem der aktiven Kühleinrichtung beschädigt wird, so dass Kühlflüssigkeit aus der Zirkulation austritt. In diesem Fall stünde bereits nach kurzer Zeit keine Kühlflüssigkeit zur Kühlung der Batterie mehr zur Verfügung. Indem weitere Ventile in das Leitungssystem nahe an den Schnittstellen zur Batterie integriert werden, welche bei einer Beschädigung des Leitungssystems geschlossen werden können, wird sichergestellt, dass die verbleibende Kühlflüssigkeit nicht einfach an der Stelle der Beschädigung austreten kann, sondern über das erste Ventil verdunstet und damit eine Kühlwirkung bereitstellt.

Dazu weist die aktive Kühleinrichtung der erfindungsgemäßen Batterie zusätzlich ein zweites und ein drittes Ventil auf. Das zweite Ventil befindet sich in Flussrichtung der Kühlflüssigkeit zwischen der Pumpe und den zu kühlenden Batteriezellen, wobei das zweite Ventil bevorzugt im Vergleich zur Pumpe näher an den zu kühlenden Batteriezellen positioniert ist. Das dritte Ventil befindet sich in Flussrichtung der Kühlflüssigkeit zwischen den zu kühlenden Batteriezellen und der Pumpe, wobei das dritte Ventil bevorzugt im Vergleich zur Pumpe näher an den zu kühlenden Batteriezellen positioniert ist. Das zweite und das dritte Ventil sind derart ausgeführt und im Leitungssystem angeordnet, dass durch Schließen des zweiten und/oder des dritten Ventils eine Zirkulation von Kühlflüssigkeit im Leitungssystem unterbunden ist. Liegen das zweite und das dritte Ventil in geschlossenem Zustand vor, so ist die Kühlflüssigkeit, die sich zwischen den beiden Ventilen zur Kühlung der Batterie befindet, am Austritt gehindert und steht, bei entsprechender Ventilstellung, zur Verdunstung über das erste Ventil zur Verfügung. Dazu ist das erste Ventil im Leitungssystem in Flussrichtung der Kühlflüssigkeit zwischen dem zweiten und dem dritten Ventil angeordnet, bevorzugt in Flussrichtung zwischen den Batteriezellen und dem dritten Ventil.

Erfindungsgemäß ist das dritte Ventil identisch mit dem ersten Ventil. In diesem Fall ist das erste Ventil derart im Leitungssystem angeordnet, dass die Zirkulation der Kühlflüssigkeit durch das erste Ventil erfolgt. Dabei ist das erste Ventil derart ausgeführt, dass die Zirkulation der Kühlflüssigkeit bei geöffnetem Zustand des ersten Ventils unterbunden ist (entspricht dem geschlossenen Zustand des dritten Ventils) und Kühlflüssigkeit durch das erste Ventil verdunsten kann. Ist das erste Ventil geschlossen (entspricht dem geöffneten Zustand des dritten Ventils), so kann die Kühlflüssigkeit ungehindert durch das erste Ventil zirkulieren und es findet keine Verdunstung durch das erste Ventil statt. Das erste Ventil ist hierzu als 3-Wege-Ventil ausgebildet.

Die erfindungsgemäße Batterie kann eine Regel- und/oder Steuereinheit aufweisen, die derart ausgebildet und angeordnet ist, dass darüber das erste Ventil geöffnet werden kann, beispielsweise wenn die Pumpe ausfällt oder in ihrer Funktion beeinträchtigt ist. Die Pumpe ist insbesondere dann in ihrer Funktion beeinträchtigt, wenn der durch die Pumpe bewegte Volumenstrom an Kühlflüssigkeit nicht mehr für die gewünschte Kühlwirkung ausreicht. Je nach Ausführung der erfindungsgemäßen Batterie kann die Regel- und/oder Steuereinheit derart ausgebildet und angeordnet sein, dass darüber zusätzlich das zweite und gegebenenfalls dritte Ventil geschlossen werden kann, beispielsweise wenn Kühlflüssigkeit aus dem Leitungssystem austritt, und gegebenenfalls das erste Ventil in eine Schaltstellung gebracht wird, die die Verdunstung von Kühlflüssigkeit aus dem Leitungssystem erlaubt.

Die erfindungsgemäße Batterie kann zusätzliche Komponenten aufweisen, z. B. ein Batteriemanagementsystem (BMS) zur Steuerung oder Regelung des Batterieverhaltens. Dabei kann die Regel- und/oder Steuereinheit zur Schaltung der ersten, zweiten und/oder dritten Ventile Bestandteil des Batteriemanagementsystems sein.

Die vorliegende Erfindung umfasst auch ein Kraftfahrzeug, welches eine erfindungsgemäße Batterie umfasst. Dabei kommt es nicht darauf an, dass Kraftfahrzeug und Batterie eine bauliche Einheit bilden, sondern, dass Kraftfahrzeug und erfindungsgemäße Batterie derart funktional in Kontakt stehen, dass die Batterie ihre Funktion während des Betriebs des Kraftfahrzeugs erfüllen kann. Dabei sind unter dem Begriff "Kraftfahrzeug" alle angetriebenen Fahrzeuge zu verstehen, die eine Batterie zur Energieversorgung von mindestens einer Komponente des Kraftfahrzeugs aufweisen, unabhängig davon welchen Antrieb diese Kraftfahrzeuge aufweisen. Insbesondere umfasst der Begriff "Kraftfahrzeug" elektrische Hybridfahrzeuge (HEV), Plug-In-Hybridfahrzeuge (PHEV), Elektrofahrzeuge (EV), Brennstoffzellenfahrzeuge, sowie alle Fahrzeuge, die eine Batterie zur mindestens teilweisen Versorgung mit elektrischer Energie einsetzen.

### Zeichnungen

Ausführungsbeispiele der Erfindung werden anhand der Zeichnungen und der nachfolgenden Beschreibung näher erläutert. Es zeigen:
Figur 1 eine Batterie mit aktiver Kühleinrichtung nach dem Stand der Technik,
Figur 2 eine erste Ausführungsform einer Batterie mit aktiver Kühleinrichtung,
Figur 3 eine zweite Ausführungsform einer Batterie mit aktiver Kühleinrichtung,
Figur 4 eine Ausführungsform einer Batterie mit aktiver Kühleinrichtung, und
Figur 5 eine Ausführungsform der erfindungsgemäßen Batterie mit aktiver Kühleinrichtung.

### Ausführungsformen der Erfindung

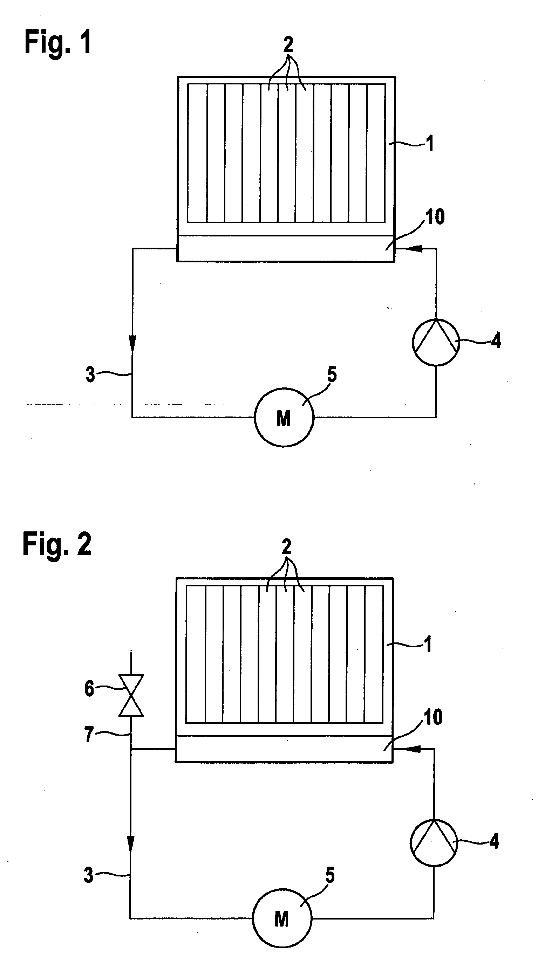

In Figur 1 wird eine Batterie mit aktiver Kühleinrichtung gezeigt, wie sie im Stand der Technik bekannt ist. Die Batterie umfasst eine Gehäuse 1, in dem mehrere Batteriezellen 2 angeordnet sind. Die Batterie wird durch eine aktive Kühleinrichtung gekühlt. Diese weist eine Kühlflüssigkeit auf, die mittels einer Pumpe 4 in einem Leitungssystem 3 zirkuliert wird. Dabei wird das Kühlmittel durch ein Kühlsystem 5 zunächst gekühlt und dann mittels der Pumpe 4 gerichtet vom Kühlsystem 5 zu den zu kühlenden Batteriezellen 2 bewegt. Dort findet eine Übertragung von Wärmeenergie zwischen den Batteriezellen 2 und der Kühlflüssigkeit statt. Dieser Wärmeübertrag kann beispielsweise durch einen Wärmeübertrager 10, z. B. in Form einer Kühlplatte, unterstützt und/oder vermittelt werden. Die aufgeheizte Kühlflüssigkeit wird dann im Leitungssystem 3 von den Batteriezellen 2 weg zum Kühlsystem 5 zirkuliert und dort wieder abgekühlt.

Im Folgenden werden einige exemplarische Ausführungsformen der beschrieben, wobei insbesondere auf die Unterschiede zur Batterie nach Figur 1 abgehoben wird. Gleiche Bauteile werden nicht erneut beschrieben.

In Figur 2 ist eine erste Ausführungsform einer Batterie mit aktiver Kühleinrichtung offenbart. Die Batterie unterscheidet sich von der Batterie aus Figur 1 darin, dass die Batterie ein erstes Ventil 6 aufweist, welches die regel- und/oder steuerbare Verdunstung von Kühlflüssigkeit aus dem Leitungssystem 3 erlaubt. Das erste Ventil 6 ist als 2-Wege-Ventil ausgestaltet. Dazu ist das erste Ventil 6 in einer Verdunstungsleitung 7 angeordnet. Die Verdunstungsleitung 7 steht derart mit dem restlichen Leitungssystem 3 in Kontakt, dass darüber Kühlflüssigkeit aus dem Leitungssystem 3 bei geöffnetem ersten Ventil 6 mit der Atmosphäre der Umgebung direkt kontaktierbar ist. Dadurch kann Kühlflüssigkeit aus dem Leitungssystem 3 durch das geöffnete erste Ventil 6 verdunsten.

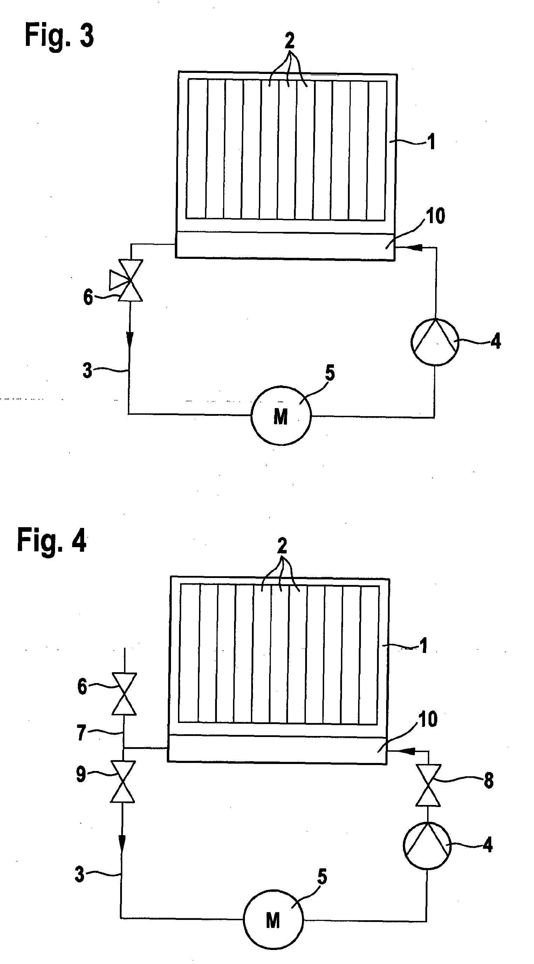

In Figur 3 ist eine zweite Ausführungsform einer Batterie mit aktiver Kühleinrichtung dargestellt. Hierbei ist das erste Ventil 6 in Flussrichtung im Leitungssystem 3 anschließend an die Batteriezellen 2 angeordnet und als 3-Wege-Ventil ausgeführt. Dabei erfolgt die Zirkulation der Kühlflüssigkeit im Wesentlichen durch das erste Ventil 6. Im geschlossenen Zustand erfolgt durch das erste Ventil 6 keine Verdunstung von Kühlflüssigkeit aus dem Leitungssystem 3. Erst wenn das erste Ventil 6, beispielsweise bei einer Beeinträchtigung der Funktion der Pumpe 4, in den offenen Zustand geschaltet wird, kann darüber Kühlflüssigkeit aus dem Leitungssystem 3 verdunsten.

In Figur 4 ist eine Ausführungsform einer Batterie gezeigt. Dabei handelt es sich um die Batterie aus Figur 2, der ein zweites Ventil 8 und ein drittes Ventil 9 hinzugefügt worden ist. Das zweite Ventil 8 ist in Flussrichtung zwischen der Pumpe 4 und den Batteriezellen 2 angeordnet. In offenem Zustand kann die Zirkulation von Kühlflüssigkeit durch das zweite Ventil 8 ungehindert statt finden. In geschlossenem Zustand kann durch das zweite Ventil 8 im Wesentlichen keine Kühlflüssigkeit mehr durchtreten. Das dritte Ventil 9 ist in Flussrichtung zwischen den Batteriezellen 2 und der Pumpe 4 angeordnet. In offenem Zustand kann die Zirkulation von Kühlflüssigkeit durch das dritte Ventil 9 ungehindert statt finden. In geschlossenem Zustand kann durch das dritte Ventil 9 im Wesentlichen keine Kühlflüssigkeit mehr durchtreten. Liegen sowohl das zweite Ventil 8 als auch das dritte Ventil 9 in geschlossenem Zustand vor, so kann Kühlflüssigkeit, die sich in Flussrichtung zwischen dem zweiten Ventil 8 und dem dritten Ventil 9 befindet, nicht mehr aus diesem Teilstück des Leitungssystems 3 entweichen, es sei denn durch Verdunstung über das geöffnete erste Ventil 6. Kommt es im Leitungssystem in Flussrichtung zwischen dem dritten Ventil 9 und dem zweiten Ventil 8 zu einem Leck im Leitungssystem 3, so können die Ventile 8 und 9 geschlossen werden und das erste Ventil 6 wird geöffnet. Dadurch ist sichergestellt, dass die Batterie nicht ohne Kühlwirkung verbleibt, da die zwischen den Ventilen 8 und 9 eingeschlossene Kühlflüssigkeit über das erste Ventil 6 verdunsten kann und somit eine Kühlwirkung bereitstellt.

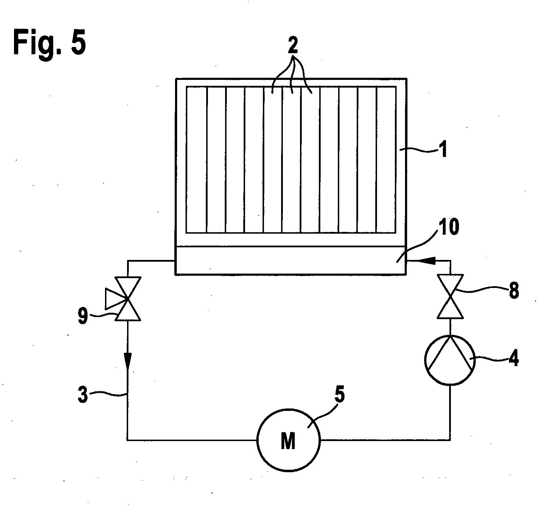

In Figur 5 ist eine Ausführungsform der erfindungsgemäßen Batterie dargestellt. Diese unterscheidet sich von der Ausführungsform nach Figur 4 darin, dass keine Verdunstungsleitung 7 vorgesehen ist, und dass das dritte Ventil 9 identisch ist mit dem ersten Ventil 6 der Ausführungsform aus Figur 3. Dabei ist das dritte Ventil 9 als 3-Wege-Ventil ausgeführt, wobei die Zirkulation der Kühlflüssigkeit bei geschlossenen Zustand des dritten Ventils 9 unterbunden ist (entspricht dem geöffneten Zustand des ersten Ventils 6) und Kühlflüssigkeit durch das dritte Ventil 9 verdunsten kann. Ist das dritte Ventil 9 geöffnet (entspricht dem geschlossenen Zustand des ersten Ventils 6), so kann die Kühlflüssigkeit ungehindert durch das dritte Ventil 9 zirkulieren und es findet keine Verdunstung von Kühlflüssigkeit aus dem Leitungssystem 3 durch das dritte Ventil 9 statt.

## Patentansprüche

1. Batterie umfassend ein Gehäuse, eine oder mehrere im Gehäuse (1) angeordnete Batteriezellen (2) und eine aktive Kühleinrichtung zum Kühlen der Batteriezellen (2) im Gehäuse (1), wobei die aktive Kühleinrichtung eine Kühlflüssigkeit, ein Leitungssystem (3) zur Zirkulation der Kühlflüssigkeit und eine Pumpe (4) zur gerichteten Bewegung der Kühlflüssigkeit im Leitungssystem (3) aufweist, wobei im Leitungssystem (3) ein erstes Ventil (6) zur regel- und/oder steuerbaren Verdunstung von Kühlflüssigkeit aus dem Leitungssystem (3) angeordnet ist, **dadurch gekennzeichnet, dass** die aktive Kühleinrichtung zusätzlich ein zweites (8) und ein drittes (9) Ventil aufweist, wobei das zweite Ventil (8) im Leitungssystem (3) in Flussrichtung der Kühlflüssigkeit zwischen der Pumpe (4) und den zu kühlenden Batteriezellen (4) angeordnet ist;
das dritte Ventil (9) im Leitungssystem (3) in Flussrichtung der Kühlflüssigkeit zwischen den zu kühlenden Batteriezellen (2) und der Pumpe (4) angeordnet ist; und wobei durch Schließen des zweiten (8) und/oder des dritten (9) Ventils eine Zirkulation von Kühlflüssigkeit im Leitungssystem (3) unterbindbar ist, wobei das dritte Ventil (9) mit dem ersten Ventil (3) identisch ist und das erste Ventil (6) derart im Leitungssystem (3) angeordnet ist, dass die Zirkulation der Kühlflüssigkeit durch das erste Ventil (6) erfolgt, wobei die Zirkulation der Kühlflüssigkeit bei geöffnetem Zustand im ersten Ventil (6) unterbindbar und das erste Ventil (6) als 3-Wege-Ventil ausgebildet ist.

2. Batterie nach Anspruch 1, wobei das erste Ventil (6) derart angeordnet und ausgeführt ist, dass über das erste Ventil (6) im geschlossenen Zustand dem Leitungssystem (3) keine Kühlflüssigkeit durch Verdunstung entziehbar ist, während über das erste Ventil (3) im geöffneten Zustand dem Leitungssystem (3) Kühlflüssigkeit durch Verdunstung entziehbar ist.

3. Batterie nach einem der Anspruch 2, wobei das zweite (8) und/oder dritte (9) Ventil im Leitungssystem (3) näher an den zu kühlenden Batteriezellen (2) angeordnet ist als an der Pumpe (4).

4. Batterie nach einem der vorhergehenden Ansprüche, wobei die Batterie zusätzlich eine Regel- und/oder Steuereinheit aufweist, die derart ausgebildet und angeordnet ist, dass das erste Ventil (6) geöffnet wird, wenn die Pumpe (4) ausgefallen oder in ihrer Funktion beeinträchtigt ist.

5. Batterie nach Anspruch 4, wobei die Regel- und/oder Steuereinheit derart ausgebildet und angeordnet ist, dass das zweite (8) und/oder dritte (9) Ventil geschlossen wird, wenn Kühlflüssigkeit aus dem Leitungssystem (3) austritt.

6. Batterie nach einem der vorhergehenden Ansprüche, wobei die Regel-und/oder Steuereinheit Bestandteil eines Batteriemanagementsystems (BMS) ist.

7. Kraftfahrzeug enthaltend eine Batterie nach einem der Ansprüche 1 bis 6.

## Claims

1. Battery comprising a housing, one or more battery cells (2) arranged in the housing (1) and an active cooling device for cooling the battery cells (2) in the housing (1), wherein the active cooling device has a cooling liquid, a line system (3) for circulating the cooling liquid and a pump (4) for the directed movement of the cooling liquid in the line system (3), wherein a first valve (6) for the regulable and/or controllable evaporation of cooling liquid from the line system (3) is arranged in the line system (3), **characterized in that** the active cooling device additionally has a second valve (8) and a third valve (9), wherein the second valve (8) is arranged in the line system (3) in the direction of flow of the cooling liquid between the pump (4) and the battery cells (4) to be cooled; the third valve (9) is arranged in the line system (3) in the direction of flow of cooling liquid between the battery cells (2) to be cooled and the pump (4); and wherein circulation of cooling liquid in the line system (3) can be prevented by closing the second valve (8) and/or the third valve (9), wherein the third valve (9) is identical to the first valve (6), and the first valve (6) is arranged in the line system (3) in such a manner that the cooling liquid circulates through the first valve (6), wherein the circulation of the cooling liquid in the first valve (6) can be prevented in the open state, and the first valve (6) is designed as a 3-port directional control valve.

2. Battery according to Claim 1, wherein the first valve (6) is arranged and designed in such a manner that, in the closed state, no cooling liquid can be extracted by evaporation from the line system (3) via the first valve (6) whereas, in the open state, cooling liquid can be extracted from the line system (3) by evaporation via the first valve (3).

3. Battery according to one of Claim 2, wherein the second valve (8) and/or the third valve (9) is arranged in the line system (3) closer to the battery cells (2) to be cooled than to the pump (4).

4. Battery according to one of the preceding claims, wherein the battery additionally has a regulating and/or control unit which is designed and arranged in such a manner that the first valve (6) is opened when the pump (4) has failed or the functioning thereof is impaired.

5. Battery according to Claim 4, wherein the regulating and/or control unit is designed and arranged in such a manner that the second valve (8) and/or the third valve (9) is closed when cooling liquid emerges from the line system (3).

6. Battery according to one of the preceding claims, wherein the regulating and/or control unit is part of a battery management system (BMS).

7. Motor vehicle containing a battery according to one of Claims 1 to 6.

## Revendications

1. Batterie comprenant un boîtier, une ou plusieurs cellules de batterie (2) disposées dans le boîtier (1) et un dispositif de refroidissement actif pour refroidir les cellules de batterie (2) dans le boîtier (1), le dispositif de refroidissement actif présentant un liquide de refroidissement, un système de conduite (3) pour la circulation du liquide de refroidissement et une pompe (4) pour le déplacement ciblé du liquide de refroidissement dans le système de conduite (3), une première soupape (6) étant disposée dans le système de conduite (3) pour la vaporisation réglable et/ou commandable de liquide de refroidissement à partir du système de conduite (3), **caractérisée en ce que** le dispositif de refroidissement actif présente en outre une deuxième (8) et une troisième (9) soupape, la deuxième soupape (8) étant disposée dans le système de conduite (3) dans la direction du flux du liquide de refroidissement entre la pompe (4) et les cellules de batterie (4) à refroidir ;
la troisième soupape (9) est disposée dans le système de conduite (3) dans la direction du flux du liquide de refroidissement entre les cellules de batterie (2) à refroidir et la pompe (4), et, par fermeture de la deuxième (8) et/ou de la troisième (9) soupape, une circulation de liquide de refroidissement dans le système de conduite (3) pouvant être supprimée, la troisième soupape (9) étant identique à la première soupape (6) et la première soupape (6) étant disposée dans le système de conduite (3) de telle sorte que la circulation du liquide de refroidissement s'effectue à travers la première soupape (6), la circulation du liquide de refroidissement pouvant être supprimée lorsque la première soupape (6) est dans l'état ouvert et la première soupape (6) étant réalisée sous forme de soupape à 3 voies.

2. Batterie selon la revendication 1, dans laquelle la première soupape (6) est disposée et réalisée de telle sorte qu'aucun liquide de refroidissement ne puisse être prélevé du système de conduite (3) par vaporisation par le biais de la première soupape (6) dans l'état fermé, tandis que du liquide de refroidissement peut être prélevé du système de conduite (3) par vaporisation par le biais de la première soupape (3) dans l'état ouvert.

3. Batterie selon l'une quelconque de la revendication 2, dans laquelle la deuxième (8) et/ou la troisième (9) soupape dans le système de conduite (3) sont disposées plus près des cellules de batterie (2) à refroidir que de la pompe (4).

4. Batterie selon l'une quelconque des revendications précédentes, dans laquelle la batterie présente en outre une unité de régulation et/ou de commande, qui est réalisée et disposée de telle sorte que la première soupape (6) soit ouverte lorsque la pompe (4) est en panne ou que son fonctionnement est affecté.

5. Batterie selon la revendication 4, dans laquelle l'unité de régulation et/ou de commande est réalisée et disposée de telle sorte que la deuxième (8) et/ou la troisième (9) soupape soit fermée lorsque du liquide de refroidissement sort du système de conduite (3).

6. Batterie selon l'une quelconque des revendications précédentes, dans laquelle l'unité de régulation et/ou de commande fait partie d'un système de gestion de batterie (BMS).

7. Véhicule automobile contenant une batterie selon l'une quelconque des revendications 1 à 6.
